# EUROPÄISCHE PATENTSCHRIFT

(11) **EP 2 534 750 B1**
(45) Veröffentlichungstag und Bekanntmachung des Hinweises auf die Patenterteilung: **25.12.2013**
(21) Anmeldenummer: 11703660.8
(22) Anmeldetag: 09.02.2011
(51) Int. Cl.: H02P 1/26, H02P 1/46, H02P 27/12, H02M 7/5387, H02P 6/08, H02P 27/06

(54) **VERFAHREN ZUR REDUZIERUNG DES ANLAUFSTROMES EINER MIT BLOCKKOMMUTIERUNG BETRIEBENEN MEHRPHASIGEN MASCHINE**
METHOD FOR REDUCING THE STARTING CURRENT OF A POLYPHASE MACHINE OPERATED BY BLOCK COMMUTATION
PROCÉDÉ POUR RÉDUIRE LE COURANT DE DÉMARRAGE D'UNE MACHINE POLYPHASÉE FONCTIONNANT PAR COMMUTATION EN BLOC

(30) Priorität: 10.02.2010 DE 102010001774
(43) Veröffentlichungstag der Anmeldung: 19.12.2012
(73) Patentinhaber: Robert Bosch GmbH, 70442 Stuttgart (DE)
(72) Erfinder: MEHRINGER, Paul, 70569 Stuttgart (DE); ROESNER, Julian, 74199 Untergruppenbach (DE); MAGINI, Fabio, 71282 Hemmingen (DE)
(86) Internationale Anmeldenummer: PCT/EP2011/051892
(87) Internationale Veröffentlichungsnummer: WO 2011/098485

(56) Entgegenhaltungen:
- US-A1- 2003 062 860
- US-A1- 2008 116 840
- US-A1- 2009 174 350

## Beschreibung

Die Erfindung betrifft ein Verfahren zur Reduzierung des Anlaufstromes einer mit Blockkommutierung betriebenen mehrphasigen Maschine.

### Stand der Technik

Es ist bekannt, zum Starten eines Kraftfahrzeugs einen riemengetriebenen Startergenerator zu verwenden. Dieser weist einen zwischen der Batterie des Kraftfahrzeugs und der Maschine angeordneten Wechselrichter auf. Bei dem Wechselrichter handelt es sich um eine Leistungselektronik, welche Highside-Schalter und Lowside-Schalter enthält. Die Maschine ist im motorischen Betrieb und im generatorischen Betrieb betreibbar.

Bei einem Start des motorischen Betriebs erfolgt ein Anlauf des Verbrennungsmotors des Kraftfahrzeugs bei stillstehendem Fahrzeug.

Eine einfache und bekannte Ansteuermethode für die Schalter der Leistungselektronik ist eine sogenannte Blockkommutierung. Ein Vorteil dieser Ansteuermethode besteht darin, dass es keiner oder allenfalls kleiner Zwischenkreiskondensatoren bedarf. Derartige Zwischenkreiskondensatoren sind in einem Kraftfahrzeug in der Regel nur schwer anbaubar. Ein Nachteil dieser Ansteuermethode besteht darin, dass hohe Anlaufströme auftreten, die sich auf die Auslegung der Elektronik und der Aufbau- und Verbindungstechnik nachteilig auswirken.

Aus der US 7,504,790 B2 ist es bereits bekannt, bei niedrigen Drehzahlen eine PWM und bei hohen Drehzahlen eine Blockkommutierung zu verwenden. Dies eröffnet die Möglichkeit, durch eine hochfrequente Taktung den Anlaufstrom zu begrenzen. Nachteilig dabei ist jedoch die Notwendigkeit eines Zwischenkreiskondensators mit vergleichsweise großer Kapazität.

Aus der US 6,577,097 B2 ist es bereits bekannt, eine Umschaltung zwischen einer 120°-Ansteuerung und einer 180°-Ansteuerung vorzunehmen. Dabei entfällt zwar die Notwendigkeit eines Zwischenkreiskondensators großer Kapazität, doch besteht das Problem, dass der Anlaufstrom bei stehendem bzw. langsam losdrehendem Verbrennungsmotor, d. h. bei einer im Bereich zwischen 0 Umdrehungen pro Minute und ca. 400 Umdrehungen pro Minute liegenden Kurbelwellendrehzahl, sehr hoch ist. Dies hat zur Folge, dass die Belastung der Endstufen ebenfalls hoch ist. Um eine durch die hohe Belastung verursachte Zerstörung der Endstufen zu vermeiden, müssen die Endstufen an diese hohe Belastung durch eine geeignete Dimensionierung angepasst werden. Dadurch sind die Endstufen aber für alle weiteren Betriebspunkte überdimensioniert. Ein weiterer Nachteil besteht darin, dass aufgrund der hohen Ströme, die in der Anlaufphase fließen, bei der Spannungsversorgung des Bordnetzes ungewünschte Spannungseinbrüche auftreten können. Bei blockkommutierten Systemen existiert keine Möglichkeit, die genannten hohen Ströme durch eine hochfrequente Taktung, beispielsweise mit 16 KHz, zu reduzieren, da hierfür kein Zwischenkreiskondensator mit ausreichender Kapazität zur Verfügung steht.

Die Dokumente US 2009174350, US 2003062860 und US 2008116840 zeigen beispielhaft, wie sich durch geeignete Anwendung der PWM-Signale Ströme und Schaltverluste verringern lassen.

### Offenbarung der Erfindung

Ein Verfahren mit den im Anspruch 1 angegebenen Merkmalen weist demgegenüber den Vorteil auf, dass der Anlaufstrom einer mit Blockkommutierung betriebenen mehrphasigen Maschine reduziert ist. Dadurch können die Endstufen günstiger dimensioniert werden, da der Anlaufstrom das relevante Auslegungskriterium ist. Bei höheren Drehzahlen begrenzen sich die Phasenströme selbstständig aufgrund der gegeninduzierten Spannung. Des Weiteren wird das Bordnetz und - sofern es sich bei der Maschine um einen riemengetriebenen Startergenerator handelt - der mechanische Riementrieb beim Anfahren weniger stark belastet. Ferner ist im Falle einer Blockierung der elektrischen Maschine keine sofortige Zerstörung der Endstufe zu erwarten.

Weitere vorteilhafte Eigenschaften der Erfindung ergeben sich aus der nachfolgenden Erläuterung von Ausführungsbeispielen anhand der Zeichnung. Es zeigt
- Figur 1: eine Blockdarstellung zur Veranschaulichung des Aufbaus eines 3-phasigen blockkommutierten riemengetriebenen Startergenerators,
- Figur 2: eine Skizze zur Veranschaulichung der Festlegung des Magnetfeldvektors im Ständer über das verwendete Ansteuerschema bei 3- und 5phasigen Systemen,
- Figur 3: Darstellungen zur Veranschaulichung des möglichen Magnetfeldvektors bei Festlegung einer bevorzugten Drehrichtung,
- Figur 4: ein Diagramm zur Veranschaulichung des Zusammenhangs zwischen gemitteltem Strangstrom und simuliertem Temperaturhub an den Endstufen bei einer Simulationsdauer von 20 ms,
- Figur 5: eine Blockdarstellung zur Veranschaulichung eines Ausführungsbeispiels für eine Ansteuerung gemäß der Erfindung und
- Figur 6: ein Diagramm zur Veranschaulichung eines Ansteuermusters, wie es im Zusammenhang mit der Erfindung verwendet werden kann.

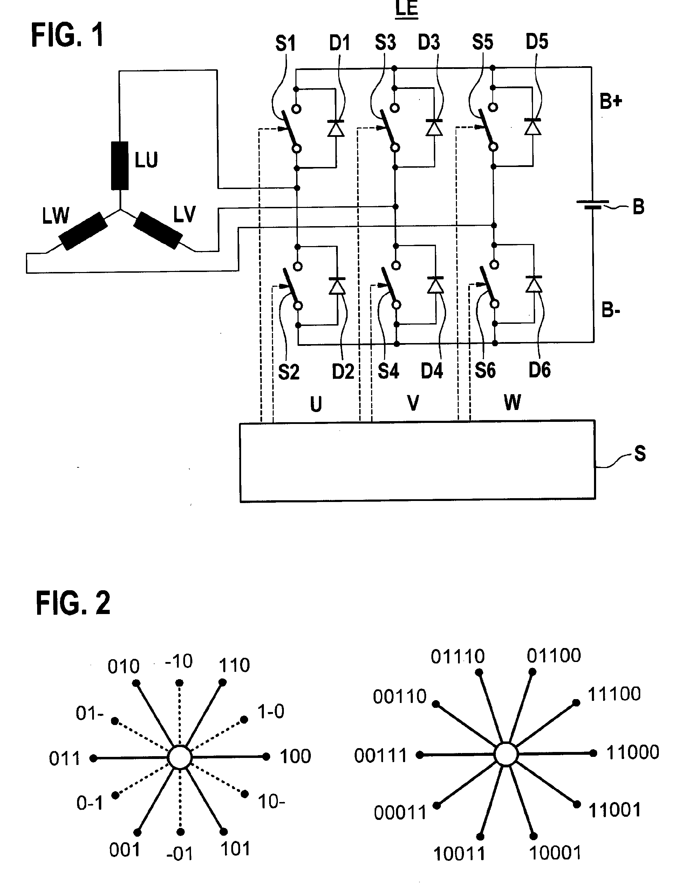

Die Figur 1 zeigt eine Blockdarstellung des Aufbaus einer mehrphasigen Maschine, bei der es sich um einen 3-phasigen blockkommutierten riemengetriebenen Startergenerator handelt. Dieser weist eine Batterie B auf, die einen Pluspol B+ und einen Minuspol B- hat. Die Batterie B ist mit einer Leistungselektronik LE verbunden. Diese enthält drei Zweige U, V, W, von denen jeder eine Reihenschaltung zweier Schalter aufweist, wobei jedem dieser Schalter eine Diode antiparallel geschaltet ist. Diese Anordnung ergibt sich bei der Verwendung von herkömmlichen Feldeffekttransistoren, da diese eine Inversdiode beinhalten. Prinzipiell ist jedoch auch die Verwendung von anderen Schaltelementen, wie z. B. IGBTs, denkbar.

Der Zweig U der Leistungselektronik LE ist an einem Verbindungspunkt zwischen den beiden Schaltern S1 und S2 mit einer Phasenwicklung LU des Ständers des Startergenerators verbunden. Der Schalter S1 des Zweigs U ist ein Highside-Schalter. Antiparallel zum Schalter S1 ist eine Diode D1 geschaltet. Der Schalter S2 des Zweigs U ist ein Lowside-Schalter. Antiparallel zum Schalter S2 ist eine Diode D2 geschaltet. Die Schalter S1 und S2 werden von einer Steuereinheit S angesteuert.

Der Zweig V der Leistungselektronik LE ist an einem Verbindungspunkt zwischen den Schaltern S3 und S4 mit einer Phasenwicklung LV des Ständers des Startergenerators verbunden. Der Schalter S3 des Zweigs V ist ein Highside-Schalter. Antiparallel zum Schalter S3 ist eine Diode D3 geschaltet. Der Schalter S4 des Zweigs V ist ein Lowside-Schalter. Antiparallel zum Schalter S4 ist eine Diode D4 geschaltet. Die Schalter S3 und S4 werden ebenfalls von der Steuereinheit S angesteuert.

Der Zweig W der Leistungselektronik LE ist an einem Verbindungspunkt zwischen den Schaltern S5 und S6 mit einer Phasenwicklung LW des Ständers des Startergenerators verbunden. Der Schalter S5 des Zweigs W ist ein Higside-Schalter. Antiparallel zum Schalter S5 ist eine Diode D5 geschaltet. Der Schalter S6 des Zweigs W ist ein Lowside-Schalter. Antiparallel zum Schalter S6 ist eine Diode D6 geschaltet. Auch die Schalter S5 und S6 werden von der Steuereinheit S angesteuert.

Die Phasenwicklungen LU, LV und LW des Ständers bilden beim gezeigten Ausführungsbeispiel eine Sternschaltung. Sie können jedoch auch im Sinne einer Dreieckschaltung miteinander verbunden sein. Sind die Schalter S1, ..., S6 jeweils in Form eines Mosfet-Schalters realisiert, so beinhalten sie bereits die separat dargestellten Dioden D1 ... D6.

Im Starterbetrieb wird der Batterie B entnommene Leistung in das System eingespeist und in mechanische Energie umgesetzt. Im Gleichrichterbetrieb erfolgt der Energiefluss von den Phasenwicklungen des Ständers über die als Gleichrichter wirkende Leistungselektronik zur Batterie und zu den in der Figur 1 nicht dargestellten Verbrauchern des Bordnetzes.

Im Starterbetrieb muss durch eine geeignete Ansteuerung der Ständerwicklungen ein Drehmoment des Läufers aufgebaut werden. Ein maximales Drehmoment kann erreicht werden, wenn das Ständerfeld und das Läuferfeld in einem Winkelversatz von 90° zueinander stehen.

Die Figur 2 zeigt Skizzen zur Veranschaulichung von Beispielen für eine Festlegung des Magnetfeldvektors im Ständer bei einer dreiphasigen Maschine und bei einer fünfphasigen Maschine. Darin steht die Ziffer "1" jeweils für einen geschlossenen Schalter in Richtung des Pluspols B+ der Batterie B, d. h. für einen geschlossenen Highside-Schalter. Die Ziffer "0" steht jeweils für einen geschlossenen Schalter in Richtung des Minuspols B- der Batterie B, d. h. für einen geschlossenen Lowside-Schalter. Ein Gedankenstrich "-" steht für eine Phase, bei der beide Schalter, d. h. sowohl der Highside-Schalter, als auch der Lowside-Schalter, im geöffneten Zustand sind.

Unter einer 120°-Blockkommutierung versteht man eine Ansteuermethode, bei welcher im Fall einer 3-phasigen Maschine nur zwei von sechs Schaltern gleichzeitig geschlossen sind. Unter einer 180°-Blockommutierung versteht man eine Ansteuermethode, bei welcher im Fall einer 3-phasigen Maschine drei von sechs Schaltern gleichzeitig geschlossen sind.

In der linken Darstellung von Figur 2 sind die Magnetvektoren für eine 3-phasige Maschine im Falle einer 120°-Blockkommutierung (gestrichelte Linien) und einer 180°-Blockkommutierung (durchgezogene Linien) gezeigt. Die Magnetvektoren für die 180°-Blockkommutierung weisen zueinander einen Winkelversatz von 60° auf. Die Magnetvektoren für die 120°-Blockkkommutierung weisen zueinander ebenfalls einen Winkelversatz von 60° auf und haben zu den Magnetvektoren der 180°-Blockkommutierung jeweils einen Winkelversatz von 30°. Die Magnetvektoren der 120°-Blockkommutierung sind kürzer als die Magnetvektoren der 180°-Blockkommutierung, da bei einer 180°-Blockkommutierung aufgrund der Parallelschaltung von zwei Highside- oder zwei Lowside-Schaltern ein höherer Strom auftritt. Alle Positionen, die zwischen den dargestellten Magnetvektoren liegen, sind über eine Blockkommutierung nicht darstellbar, sondern müssen durch eine andere Modulationsart, beispielsweise eine Sinusmodulation, angefahren werden. Bei blockkommmutierten Systemen ergibt sich aufgrund dieser Sprünge stets ein Momentenrippel am Läufer.

In der Anlaufphase wird üblicherweise die aktuelle Lage bzw. Winkelposition des Läufers relativ zum Ständer mittels einer Winkelmessvorrichtung gemessen. In Abhängigkeit vom Messergebnis wird ein Ständermagnetfeld derart eingestellt, dass der zugehörige Ständer-Magnetfeldvektor dem gewünschten 90°-Versatz in Bezug auf das Läufermagnetfeld bzw. den Läufer-Magnetfeldvektor möglichst nahe kommt.

In der rechten Darstellung von Figur 2 sind die Magnetvektoren für eine 5-phasige Maschine gezeigt. Der Einfachheit halber wurde hier lediglich das Äquivalent zu einer 180°-Ansteuerung bei 3-phasigen Maschinen dargestellt, d. h. von 10 zur Verfügung stehenden Schaltern sind zu jedem beliebigen Zeitpunkt 5 Schalter in Betrieb. Die einzelnen Magnetfeldvektoren weisen jeweils einen Versatz von 36° zueinander auf.

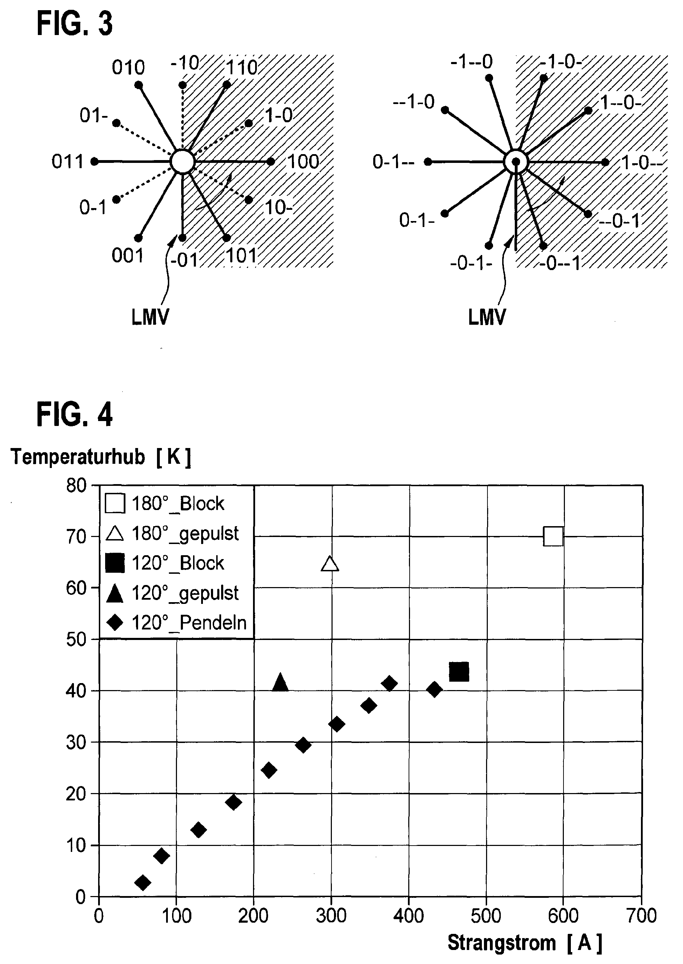

Die Figur 3 zeigt Darstellungen zur Veranschaulichung eines möglichen Magnetfeldvektors bei Festlegung einer bevorzugten Drehrichtung.

In der linken Darstellung von Figur 3 ist beispielhaft die Situation für eine 3-phasige Maschine gezeigt. Bei diesem Beispiel zeigt der Läufer-Magnetfeldvektor LMV senkrecht nach unten. Für alle weiteren Positionen mit 60°-Versatz des LMV kann das notwendige Ansteuermuster für die Leistungselektronik des Ständers aus einfachen Symmetriebetrachtungen gewonnen werden. Für eine 180°-Blockkommutierung würde folglich das Ansteuermuster "100" eingestellt, für eine 120°-Blockkkommutierung müsste eine Entscheidung zwischen den Ansteuermustern "10 -" oder "1 - 0" getroffen werden. Beide letztgenannten Ansteuermuster würden zunächst dasselbe Drehmoment an der Maschine aufbauen. Der in der Figur 3 schraffierte Bereich ist der erlaubte Bereich für den Läufer-Magnetfeldvektor, der zu einer Beschleunigung des Läufers entgegen dem Uhrzeigersinn führt, allerdings mit unterschiedlich starkem Drehmoment. Untersuchungen haben ergeben, dass innerhalb der ersten Millisekunden, typischerweise innerhalb von 20 Millisekunden, kaum eine Drehzahlerhöhung auftritt, aber hohe Ströme auftreten. Dies führt zu starken Temperaturerhöhungen in den Endstufen der Leistungselektronik, die im weiteren Betrieb der Maschine nicht mehr auftreten. Derartige starke Temperaturerhöhungen können vermieden werden, wenn im Stillstand der Maschine der Ständer-Magnetfeldvektor innerhalb des in der Figur 3 schraffierten Bereiches variiert wird. Idealerweise pendelt der Ständer-Magnetfeldvektor um den gewünschten Winkel von 90° zum Läufer-Magnetfeldvektor. Der in der Figur 3 schraffierte Bereich zeichnet sich dadurch aus, dass an der ersten Stelle stets die Ziffer "1" steht. Daher ist der zugehörige Highside-Zweig am stärksten belastet. Beim erfindungsgemäßen Verfahren wird durch eine intelligente Ansteuerung der Lowsidezweige eine Entlastung des entsprechenden Strompfades herbeigeführt. Die Ansteuerfolge besitzt damit folgenden Ablauf: 1 - 0, 1 - -, 10 -, 1 --. Diese Abfolge wird wiederholt, wobei die Zeitdauern der Einzelzustände je nach Stromanforderung variierten können.

In der rechten Darstellung von Figur 3 ist beispielhaft die Situation für eine 5-phasige Maschine gezeigt, wobei auch bei diesem Beispiel der Läufer-Magnetfeldvektor LMV senkrecht nach unten zeigt. Der Einfachheit halber wurde hier ausschließlich das Äqivalent zu einer 120°-Ansteuerung bei 3-phasigen Maschinen eingetragen, d. h. zu jedem Zeitpunkt sind nur 2 der 10 zur Verfügung stehenden Schalter aktiv angesteuert. Es ist ersichtlich, dass 5-phasige Maschinen oder allgemeine höherphasige Maschinen einen Vorteil gegenüber 3-phasigen Maschinen haben, da der Ständer-Magnetfeldvektor feiner aufgelöst eingestellt werden kann. Dadurch fällt der Momentenverlust im Falle einer Abweichung vom gewünschten Idealwinkel von 90° kleiner aus als bei 3-phasigen Maschinen.

Untersuchungen haben ergeben, dass bei der bekannten Blockkommutierung unterschiedliche Auswirkungen auf die zu erwartenden Temperaturen an den Endstufen vorliegen. Im Falle einer 120°-Blockkommutierung ergeben sich niedrigere Endstufenströme als im Falle einer 180°-Blockkommutierung. Des Weiteren hat sich gezeigt, dass im Falle einer gepulst betriebenen Blockkommutierung die in den Endstufen fließenden Ströme weiter reduziert sind. Dadurch werden der gemittelte Batteriestrom und auch das aufgebaute Drehmoment reduziert. Aufgrund der Löschenergien der Zuleitungsinduktivität wird aber die Temperaturbelastung der Endstufen nur wenig erniedrigt. Beim Stand der Technik wird eine derartige Erniedrigung der Temperaturbelastung der Endstufen durch den Einsatz eines Zwischenkreiskondensators mit großer Kapazität herbeigeführt.

Beim erfindungsgemäßen Verfahren ist ein Einsatz eines Zwischenkreiskondensators mit großer Kapazität nicht notwendig. Beim erfindungsgemäßen Verfahren wird eine Erniedrigung der Temperaturbelastung der Endstufen dadurch herbeigeführt, dass in der Anlaufphase je nach Momentanposition entweder der einer Stromphase zugeordnete Highside-Schalter im geschlossenen Zustand gehalten wird und die anderen Stromphasen zugeordneten Lowside-Schalter alternierend angesteuert werden oder ein Lowside-Schalter im geschlossenen Zustand gehalten wird und die beiden Highside-Schalter der anderen Phasen alternierend angesteuert werden. Im Ausführungsbeispiel gemäß der linken Darstellung von Figur 3 wird zwischen den Schaltzuständen "10 -" und "1 - 0" hin- und hergeschaltet, vorzugsweise mit einer variablen Dauer der einzelnen Ansteuervorgänge und/oder einer variablen Pause zwischen aufeinanderfolgenden Ansteuervorgängen. Genau genommen besteht die Ansteuerfolge aus den Schaltzuständen "10 -", "1 - -", "1 - 0" "1 - -". Dabei kann das Einschaltverhältnis zwischen den Lowside-Schaltern unsymmetrisch gewählt werden. Ferner erfolgt diese alternierende Ansteuerung vorzugsweise mit einer Umschaltdauer, die kleiner ist als die Zeitkonstante der Ständerwicklung.

Diese alternierende Ansteuerung der Lowside-Schalter entspricht einem Pendeln des Ständermagnetfelds um die ideale Winkelposition von 90°.

Durch diese Vorgehensweise wird die Möglichkeit geschaffen, den gemittelten Batteriestrom in gewünschter Weise zu steuern, ohne dabei die Temperaturbelastung der Endstufen nennenswert zu erhöhen. Der obere Schaltzweig, d. h. der jeweils zugehörige Highside-Schalter, wird dabei im geschlossenen Zustand gehalten.

Überschreitet die Drehzahl des Läufers einen vorgegebenen Drehzahlschwellenwert, dann wird auf ein normales Ansteuermuster im Sinne einer 120°-Blockommutierung oder einer 180°-Blockkommutierung umgeschaltet, d. h. eine blockkommutierte Ansteuerung der Schalter der Leistungselektronik vorgenommen.

Ein Vorteil der erfindungsgemäßen Vorgehensweise besteht darin, dass zwar der obere Schaltzweig kontinuierlich belastet wird, die Löschenergien aber abwechselnd in den beiden Lowside-Schaltern umgesetzt werden. Dabei kommt es zwischen den beteiligten drei Schaltern zu einem Ausgleich der auftretenden Verlustleistungen und damit zu einem Temperaturausgleich. Über eine Variierung der Pausen zwischen den Schaltzuständen der Lowside-Schalter kann die Stromhöhe gesteuert werden. In den Ansteuerpausen erfolgt ein Freilauf des Strangstromes in den Inversdioden des jeweils gegenüberliegenden Pfades. Dieser Freilauf kann über eine aktive Ansteuerung des entsprechenden Schaltpfades verlängert werden, wodurch die Verlustleistung im Schaltelement verringert wird.

Die Figur 4 zeigt ein Diagramm zur Veranschaulichung des Zusammenhangs zwischen gemitteltem Strangstrom und simuliertem Temperaturhub an den Endstufen bei einer Simulationsdauer von 20 ms. Der gemittelte Strangstrom ist jeweils ein Maß für das erzielbare Drehmoment. Hierbei wurde für die Strangströme die Summe der beiden Strangströme betrachtet, die in Momenten bildender Richtung liegen. Bei dem vorliegenden Ausführungsbeispiel sind dies W-U und W-V. Aus der Figur 4 ist ersichtlich, dass bei einem gepulsten Betrieb mit 120°-Ansteuerung oder 180°-Ansteuerung die Temperaturbelastung wegen der auftretenden Löschspannungen nicht reduziert wird. Durch das Verfahren gemäß der Erfindung werden die Strangströme und die Temperaturbelastung proportional zueinander reduziert.

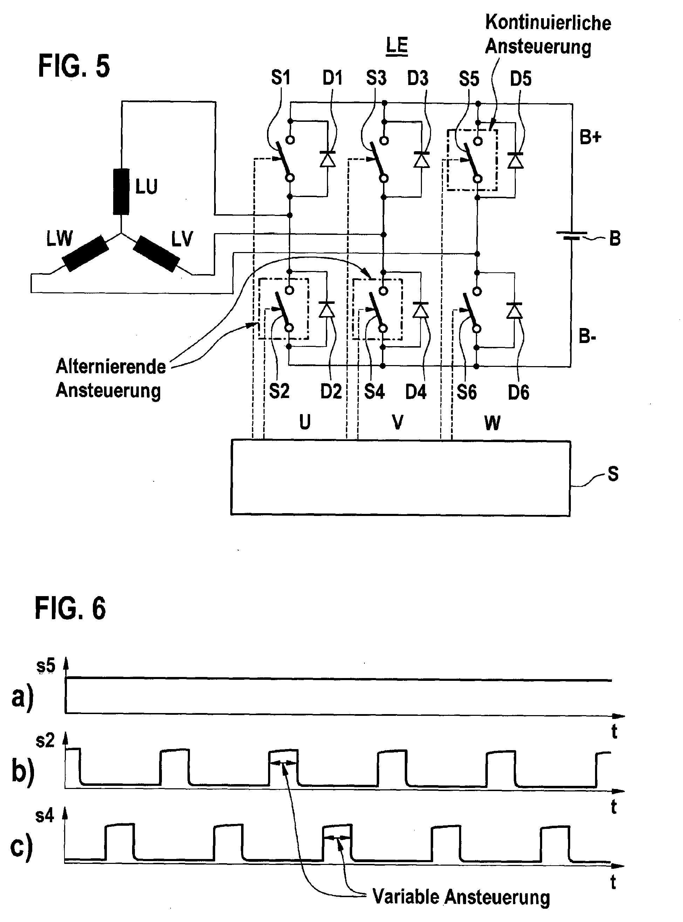

Die Figur 5 zeigt eine Blockdarstellung zur Veranschaulichung eines Ausführungsbeispiels für eine Ansteuerung gemäß der Erfindung. Je nach aktueller Lage des Läufermagnetfeldvektors fällt die entsprechende Ansteuerung anders aus. Aus dieser Figur ist ersichtlich, dass der im Zweig W angeordnete Highside-Schalter S5 kontinuierlich angesteuert wird, während der im Zweig U angeordnete Lowside-Schalter S2 und der im Zweig V angeordnete Lowside-Schalter S4 alternierend angesteuert werden. Der Aufbau der in der Figur 5 gezeigten Maschine stimmt mit dem Aufbau der in der Figur 1 gezeigten Maschine überein.

Die Figur 6 zeigt ein Diagramm zur Veranschaulichung eines Ansteuermusters, wie es im Zusammenhang mit der Erfindung verwendet werden kann. Die Figur 6a veranschaulicht die kontinuierliche Ansteuerung des im Zweig W angeordneten Highside-Schalters S5 mittels eines Steuersignals s5. Die Figur 6b veranschaulicht die Ansteuerung des im Zweig U angeordneten Lowside-Schalters S2 mittels eines Steuersignals s2. Die Figur 6c veranschaulicht die Ansteuerung des im Zweig V angeordneten Lowside-Schalters S4 mittels eines Steuersignals s4. Es ist ersichtlich, dass die Schalter S2 und S4 alternierend angesteuert werden. Des Weiteren ist aus den Figuren 6b und 6c ersichtlich, dass die Ansteuerdauer der Schalter S2 und S4 variiert werden kann.

Liegen andere Startpositionen vor, die von dem oben beschriebenen Winkel abweichen, dann sind die jeweiligen 120°-Ansteuermuster zu bestimmen, die sich zu beiden Seiten des 90°-Winkels befinden, und es ist zwischen den jeweiligen Ansteuermustern in der oben beschriebenen Weise hin- und herzuschalten. Sobald aufgrund einer Drehung des Läufers ein Winkel von 30° zwischen dem Läuferfeld und dem Ständerfeld unterschritten wird, muss das Ansteuermuster nachgeführt werden. Je nach erreichter Drehzahl kann das Ansteuermuster beliebig nachgeführt werden.

In der rechten Darstellung der Figur 3 wurden für eine 5-phasige Maschine Ansteuermuster dargestellt, die nur einen Strangstrom erzeugen, also der 120°-Blockkommutierung bei 3-phasigen Maschinen entsprechen. Es ist ersichtlich, dass durch ein Abfahren im Uhrzeigersinn der in der Figur 3 beschriebenen Ansteuermuster jeweils eine Endstufe beeinflusst wird. Demnach kann bei 5-phasigen Maschinen dasselbe Verfahren verwendet werden wie bei 3-phasigen Maschinen. Zusätzlich ergibt sich bei 5-phasigen Maschinen der Vorteil, dass beim Anlaufen nur an einen Strang Spannung angelegt wird und damit der maximale Widerstand ansteht. Im späteren Verlauf kann bei steigender Spannung durch Zuschaltung einer variableren Anzahl von Strängen der Gesamtwiderstand erniedrigt und damit der Gesamtstrom in der Maschine erhöht werden.

Gemäß einer bevorzugten Ausführungsform der Erfindung erfolgt die alternierende Ansteuerung der Lowside-Schalter mit einer Umschaltdauer, die kleiner ist als die Zeitkonstante der Ständerwicklung, die im Bereich weniger Millisekunden liegt. Dies bewirkt einerseits, dass die resultierenden Ströme und damit auch das erzeugte Drehmoment eine geringe Welligkeit aufweisen. Andererseits ist die Schaltfrequenz hinreichend klein, so dass ein Zwischenkreiskondensator nicht notwendig ist.

Gemäß einer weiteren bevorzugten Ausführungsform kann das Einschaltverhältnis zwischen den beiden Lowside-Schaltern unsymmetrisch gewählt werden. Dies hat den Vorteil, dass der ideale Versatz des Magnetvektors von 90° zwischen Ständer- und Läufermagnetfeld ansatzweise noch nachgeführt werden kann.

Oben wurde ein Verfahren gemäß der Erfindung beispielhaft für die Schaltvektoren "10 - " und 1 - 0" bzw. "- 01" und "0 - 1" beschrieben. Die Wahl dieser Vektoren richtet sich nach der Ruheposition des Läufers der Maschine. Es können bei einer anderen Ruheposition des Läufers andere Schaltvektoren verwendet werden.

Beim oben beschriebenen Verfahren wurde der einer Stromphase zugeordnete Highside-Schalter im geschlossenen Zustand gehalten und die anderen Stromphasen zugeordneten Lowside-Schalter alternierend angesteuert, um eine Reduzierung des Anlaufstromes zu erreichen. Bei einer anderen Ruheposition des Läufers können alternativ dazu der einer Stromphase zugeordnete Lowside-Schalter im geschlossenen Zustand gehalten und die anderen Stromphasen zugeordneten Highside-Schalter alternierend angesteuert werden, um eine Reduzierung des Anlaufstromes zu erreichen.

Des Weiteren können auch Schaltvektoren der 180°-Blockkommutierung oder eine Kombination aus beiden verwendet werden, beispielsweise ein Pendeln zwischen "10-" und "100".

Eine andere Ausführungsform besteht darin, eine Umschaltung zwischen mehr als zwei Zuständen vorzunehmen. Dies ist insbesondere bei Maschinen mit mehr als drei Phasen von Vorteil.

Bei dem Verfahren gemäß der Erfindung ist neben dem Anlaufstrom auch das Anfahrmoment reduziert. Eine weitere Ausführungsform besteht deshalb darin, das Verfahren gemäß der Erfindung in Abhängigkeit vom Betriebszustand des Kraftfahrzeugs, innerhalb dessen die Maschine angeordnet ist, aktivierbar und/oder deaktivierbar auszugestalten. Insbesondere besteht die Möglichkeit, im Falle eines Fahrzeugkaltstartes beim Vorliegen einer tiefen Umgebungstemperatur von einer Verwendung des beanspruchten Verfahrens abzusehen und stattdessen den Fahrzeugstart konventionell vorzunehmen. Des Weiteren besteht die Möglichkeit, das Verfahren gemäß der Erfindung im Falle eines Warmstarts grundsätzlich zu aktivieren.

Ein Verfahren gemäß der Erfindung ist insbesondere einsetzbar beim Anlaufen von mit Blockkommutierung betriebenen mehrphasigen Maschinen, um den An laufstrom zu reduzieren. Vor allem eignet sich das beanspruchte Verfahren zu einer Verwendung im Zusammenhang mit riemengetriebenen Startergeneratoren und mit integrierten Startergeneratoren. Eine vorteilhafte Weiterbildung besteht darin, einen Auslauf der Maschine derart zu steuern, dass der Läufer der Maschine in einer zu einem Neustart geeigneten Winkelposition zum Stehen kommt.

Vorstehend wurde stets davon ausgegangen, dass die Läuferposition und die Läuferdrehzahl ermittelt wird und beim Vorliegen einer Läuferdrehzahl, die kleiner als ein vorgegebener Schwellenwert ist, die erfindungsgemäße Ansteuerung der Schalter vorgenommen wird. Alternativ dazu kann die erfindungsgemäße Ansteuerung der Schalter auch in Abhängigkeit vom gemessenen Ständerstrom aktiviert oder deaktiviert werden.

## Patentansprüche

1. Verfahren zur Reduzierung des Anlaufstromes einer mit Blockkommutierung betriebenen mehrphasigen Maschine, welche eine Batterie, pro Phase je eine Highside-Schalter, einen Lowside-Schalter und eine Phasenwicklung, sowie einen Läufer aufweist, wobei
- der einer Stromphase zugeordnete Highside-Schalter im geschlossenen Zustand gehalten wird und die anderen Stromphasen zugeordneten Lowside-Schalter alternierend angesteuert werden oder
- der einer Stromphase zugeordnete Lowside-Schalter im geschlossenen Zustand gehalten wird und die anderen Stromphasen zugeordneten Highside-Schalter alternierend angesteuert werden **dadurch gekennzeichnet, dass** das Einschaltverhältnis zwischen den Lowside- oder Highside-Schaltern unsymmetrisch gewählt wird.

2. Verfahren nach Anspruch 1, **dadurch gekennzeichnet, dass** die Läuferdrehzahl ermittelt wird und beim Vorliegen einer Läuferdrehzahl, die kleiner als ein Schwellenwert ist, die Ansteuerung der Schalter gemäß Anspruch 1 vorgenommen wird.

3. Verfahren nach Anspruch 1, **dadurch gekennzeichnet, dass** der Ständerstrom ermittelt wird und abhängig vom gemessenen Ständerstrom das Verfahren aktiviert oder deaktiviert wird.

4. Verfahren nach einem der vorhergehenden Ansprüche, **dadurch gekennzeichnet, dass** die Ansteuerung der Schalter in Abhängigkeit von der Läuferposition nachgeführt wird, um ein magnetisches Drehfeld zu erzeugen.

5. Verfahren nach einem der vorhergehenden Ansprüche, **dadurch gekennzeichnet, dass** die Ansteuerdauer der alternierend angesteuerten Lowside- oder Highside-Schalter variiert wird.

6. Verfahren nach einem der vorhergehenden Ansprüche, **dadurch gekennzeichnet, dass** bei der alternierenden Ansteuerung der Lowside oder Highside-Schalter die Pausen zwischen aufeinanderfolgenden Ansteuervor gängen variiert werden.

7. Verfahren nach einem der vorhergehenden Ansprüche, **dadurch gekennzeichnet, dass** die alternierende Ansteuerung mit einer Umschaltdauer vorgenommen wird, die kleiner ist als die Zeitkonstante der Ständerwicklung.

8. Verfahren nach einem der vorhergehenden Ansprüche, **dadurch gekennzeichnet, dass** es in Abhängigkeit vom Betriebszustand eines Kraftfahrzeugs, innerhalb dessen die Maschine angeordnet ist, aktivierbar und/oder deaktivierbar ist.

9. Verfahren nach Anspruch 9, **dadurch gekennzeichnet, dass** es im Falle eines Fahrzeugstarts bei tiefen Temperaturen deaktiviert wird.

10. Verfahren nach Anspruch 9, **dadurch gekennzeichnet, dass** es im Falle eines Warmstarts des Fahrzeugs aktiviert wird.

11. Verfahren nach einem der vorhergehenden Ansprüche, **dadurch gekennzeichnet, dass** die Maschine ein riemengetriebener Startergenerator ist und ein Auslauf der Maschine derart gesteuert wird, dass der Läufer in einer zu einem Neustart der Maschine geeigneten Winkelposition zum Stehen kommt.

12. Steuereinheit (S), die derart ausgestaltet ist, alle Schritte eines der Verfahren nach einem der Ansprüche 1 bis 12 auszuführen.

13. Mit Blockkommutierung betreibbare mehrphasige Maschine umfassend eine Steuereinheit (S) nach Anspruch 13.

## Claims

1. Method for reducing the start-up current of a polyphase machine which is operated by block commutation and which has a battery, in each case a high-side switch, a low-side switch and a phase winding for each phase, and also a rotor, wherein
- the high-side switch which is associated with one current phase is held in the closed state and the lowside switches which are associated with other current phases are alternately actuated, or
- the low-side switch which is associated with one current phase is held in the closed state and the highside switches which are associated with other current phases are alternately actuated,
**characterized in that** the duty cycle between the lowside or high-side switches is selected to be non-symmetrical.

2. Method according to Claim 1, **characterized in that** the rotor rotation speed is determined and, when there is a rotor rotation speed which is less than a threshold value, actuation of the switches according to Claim 1 is performed.

3. Method according to Claim 1, **characterized in that** the stator current is determined and the method is activated or deactivated depending on the measured stator current.

4. Method according to one of the preceding claims, **characterized in that** the actuation of the switches is updated depending on the rotor position in order to generate a magnetic rotating field.

5. Method according to one of the preceding claims, **characterized in that** the actuation period of the alternately actuated low-side or high-side switches is varied.

6. Method according to one of the preceding claims, **characterized in that**, during the alternating actuation of the low-side or high-side switches, the intervals between successive actuation processes are varied.

7. Method according to one of the preceding claims, **characterized in that** the alternating actuation is performed with a changeover period which is less than the time constant of the stator winding.

8. Method according to one of the preceding claims, **characterized in that** it can be activated and/or deactivated depending on the operating state of a motor vehicle within which the machine is arranged.

9. Method according to Claim 9, **characterized in that** it is deactivated in the case of the vehicle being started at low temperatures.

10. Method according to Claim 9, **characterized in that** it is activated in the case of warm-starting of the vehicle.

11. Method according to one of the preceding claims, **characterized in that** the machine is a belt-driven starter generator and stopping of the machine is controlled in such a way that the rotor comes to a stop in an angular position which is suitable for restarting the machine.

12. Control unit (S) which is configured in such a way as to execute all of the steps of one of the methods according to one of Claims 1 to 12.

13. Polyphase machine which can be operated by block commutation, comprising a control unit (S) according to Claim 13.

## Revendications

1. Procédé de réduction du courant de démarrage d'une machine polyphasée conduite par commutation en blocs et présentant une batterie, un commutateur haut, un commutateur bas et un bobinage de phase pour chaque phase ainsi qu'un induit, et dans lequel :
le commutateur haut associé à une phase de courant est maintenu à l'état fermé et les commutateurs bas associés aux autres phases de courant sont commandés en alternance ou
le commutateur bas associé à une phase de courant est maintenu à l'état fermé et les commutateurs hauts associés aux autres phases de courant sont commandés en alternance,
**caractérisé en ce que**
le comportement de branchement sélectionné pour les commutateurs bas ou les commutateurs hauts est asymétrique.

2. Procédé selon la revendication 1, **caractérisé en ce que** la vitesse de rotation de l'induit est déterminée et **en ce qu'**au cas où la vitesse de rotation de l'induit est inférieure à une valeur de seuil, la commande des commutateurs s'effectue selon la revendication 1.

3. Procédé selon la revendication 1, **caractérisé en ce que** le courant de stator est déterminé et **en ce que** le procédé est activé ou désactivé en fonction du courant de stator qui a été mesuré.

4. Procédé selon l'une des revendications précédentes, **caractérisé en ce que** la commande de commutateur est réalisée en fonction de la position de l'induit de manière à former un champ magnétique tournant.

5. Procédé selon l'une des revendications précédentes, **caractérisé en ce que** la durée de commande des commutateurs hauts ou des commutateurs bas commandés en alternance est variable.

6. Procédé selon l'une des revendications précédentes, **caractérisé en ce que** dans la commande alternée des commutateurs bas ou des commutateurs hauts, les pauses entre les opérations successives de commande sont variables.

7. Procédé selon l'une des revendications précédentes, **caractérisé en ce que** la commande alternée est réalisée à l'aide d'une durée de commutation plus petite que la constante de temps du bobinage de stator.

8. Procédé selon l'une des revendications précédentes, **caractérisé en ce qu'**il peut être activé et/ou désactivé en fonction de l'état de fonctionnement d'un véhicule automobile dans lequel la machine est disposée.

9. Procédé selon la revendication 9, **caractérisé en ce qu'**il est désactivé en cas de démarrage du véhicule à basse température.

10. Procédé selon la revendication 9, **caractérisé en ce qu'**il est activé en cas de démarrage à chaud du véhicule.

11. Procédé selon l'une des revendications précédentes, **caractérisé en ce que** la machine est un générateur-démarreur entraîné par courroie et **en ce que** l'arrêt de la machine est commandé de telle sorte que l'induit s'arrête en une position angulaire qui convient pour un redémarrage de la machine.

12. Unité de commande (S) configurée de manière à exécuter toutes les étapes d'un procédé selon l'une des revendications 1 à 12.

13. Machine polyphasée conduite par commutation en blocs et comprenant une unité de commande (S) selon la revendication 13.
